# EUROPEAN PATENT APPLICATION

(11) **EP 2 519 024 A1**
(43) Date of publication of application: **31.10.2012**
(21) Application number: 12164277.1
(22) Date of filing: 16.04.2012
(51) Int. Cl.: H04N 21/4788, H04N 21/478, H04N 21/4784

(54) **Crowd sourcing**

(30) Priority: 30.04.2011 US 201161481153 P; 23.09.2011 US 201113244035; 04.04.2012 KR 20120035046
(71) Applicant: Samsung Electronics Co., Ltd., Suwon-si, Gyeonggi-do, 443-742 (KR)
(72) Inventor: Tran, Dang Van, Laguna Niguel, CA California 92677 (US); Zheng, Xing, Irvine, CA California 92604 (US); Khoshgozaran, Jaffar, Pasadena, CA California 91106 (US); Zhu, Yingnan, Irvine, CA California 92612 (US)
(74) Representative: Hancox, Jonathan Christopher

(57) **Abstract**

A community of consumers of media content is created by providing users of an interactive television system with the capability to augment content and provide the augmented content to a repository. The augmented content may include rankings, votes, micro-games, user created tags, metadata, or other information associated with content. The augmented content is then made available to the community. Financial incentives may be provided to users to contribute augmented content, to rank augmented content, or to judge augmented content.

## Description

The present invention relates to consumer electronics. More specifically the present invention relates to crowd sourcing in a television system.

Advanced television systems are of increasing interest. With the emergence of advanced televisions having internet, Ethernet, and Wi-Fi capabilities, users are able to perform activities beyond traditional and passive TV watching experience. However, TV applications and services are designed around the concept of 1 user per device. As a result, the conventional TV user interaction paradigm does not fully take advantage of the full potential of the new technology.

An apparatus, system, method, and computer program product for crowd sourcing in a smart television system is disclosed. Individual smart televisions may contribute content, metadata, or other information to a community hubsite and also consume content or ads based on information in the hubsite. A community is formed in which contributions related to content may be made to a hubsite. In a contributing phase, individual users may make contributions to a hubsite having a repository. In a ranking/evaluation phase contributions may be ranked or judged. In a consumption phase, augmented contributions are consumed within the community. Contributions may include user identified content, user shared information, micro-games, or other information. In one implementation TV viewers contribute metadata which is published and uploaded to the hubsite. The metadata may be downloaded, parsed, and used to play media for other consumers. In another implementation, the contributions permit associations between media content and sources of goods or services to be made to permit new forms of advertising.

In accordance with one aspect, the invention provides a method for crowd-sourcing in a community of interactive television users in which individual users may consume content and make contributions related to the content, comprising: receiving, from a community of consumers of media content, user inputs from a subset of users acting as contributors providing media contributions to the media content, wherein the media contributions include metadata for at least one other application to generate augmented content; generating augmented content based on the user inputs; and sharing the augmented content with the community of consumers.

In accordance with another aspect, the invention provides a method for crowd-sourcing in an interactive television network in which each interactive media device in the network is communicatively coupled to the Internet and in which individual users may consume content and make contributions related to the content, comprising: providing a communication interface between a content repository and each interactive media device within the network, where each interactive media device includes at least one associated interaction device and micro-applications for users to enter inputs; receiving at the content repository user inputs from a subset of users acting as contributors to a selection of media content; generating augmented content based on the received user inputs; and providing access to the augmented content available to a community of consumers of the media content.

In preferred embodiments, the method of the invention may be computer-implemented.

In accordance with a further aspect, the invention provides a system for crowd-sourcing in an interactive television network, comprising: a repository of augmented media content, the repository configured to receive from a community of consumers of media content, user inputs from a subset of contributors via a network providing metadata contributions to media provided to the network; the repository generating augmented content from the user inputs; and the repository sharing the augmented content with the network.

Embodiments of the invention will now be described by way of example only and with reference to the accompanying drawings which:
FIG. 1 is a diagram illustrating a portion of a crowd sourcing smart television system in accordance with one embodiment of the present invention.
FIG. 2 is a flow diagram illustrating a method of crowd sourcing in accordance with an embodiment of the present invention.
FIG. 3 depicts a method of crowd sourcing using micro-apps in accordance with one embodiment of the present invention.
FIG. 4 depicts aspects of user tagging to form a bridge between user identified content and service providers in accordance with one embodiment of the present invention.
FIG. 5 depicts how crowd sourcing links multiple users over multiple devices for a variety of different smart TV uses in accordance with one embodiment of the present invention.
FIG. 6 depicts examples of contributions to post cards and fact games in accordance with one embodiment of the present invention.
FIG. 7 depicts examples of user-contributed games in accordance with one embodiment of the present invention.
FIG. 8 depicts examples of games, surveys, and judging in accordance with one embodiment of the present invention.
FIG. 9 illustrates an example of providing related information in accordance with one embodiment of the present invention.
FIG. 10 illustrates exemplary modules of a shared media device in accordance with one embodiment of the present invention.

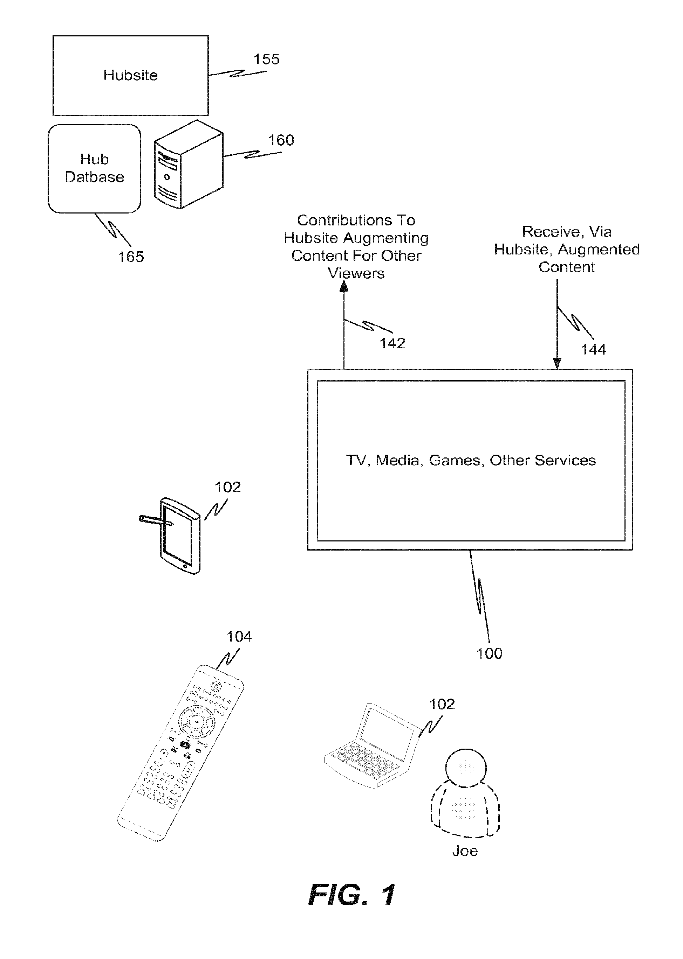

The present invention is generally related to crowd sourcing in an interactive television system. Referring to Figure 1, an embodiment of an individual smart television system includes a shared media device 100 and local interaction devices, such as a remote control 104 and any local interaction devices 102 in communication with shared media device 100. An individual television system may, for example, have a shared media device 100 (e.g., a smart television with Wi-Fi and/or Ethernet capabilities). Within the home, interaction devices 102 associated with a television system may include personal computers and handheld devices, such as smart phones and tablet or pad computers. The interaction devices 102 may also function as "second screen devices" that display content and/or permit inputs to be entered in addition to the remote control 104. The system permits viewers to perform actions such as rating or voting on media content that is being played on the media device. Other examples of actions that a user may perform including tagging content, such as forming associating connections between the content and goods or services, creating micro-games for content, and providing information related to the content, such as best user settings for playing the content, tags providing recommendations based on the content, or providing other metadata associated with the content.

An individual television system communicates with a hub site 155 having a hub database 165 as a repository, memory, and one or more processors, such as a hub server 160. The media device may make contributions 142 to augment content for other viewers. Additionally, an individual media device may receive 144 augmented content generated by other viewers. Incentives can be provided for contributing augmented content, such as points, rewards, or micro-payments.

The system of the present invention thus supports crowd sourcing since individual users can input ratings, votes, games, tags, annotations, comments or other inputs related to content which, in turn, is converted into useful information for other viewers.

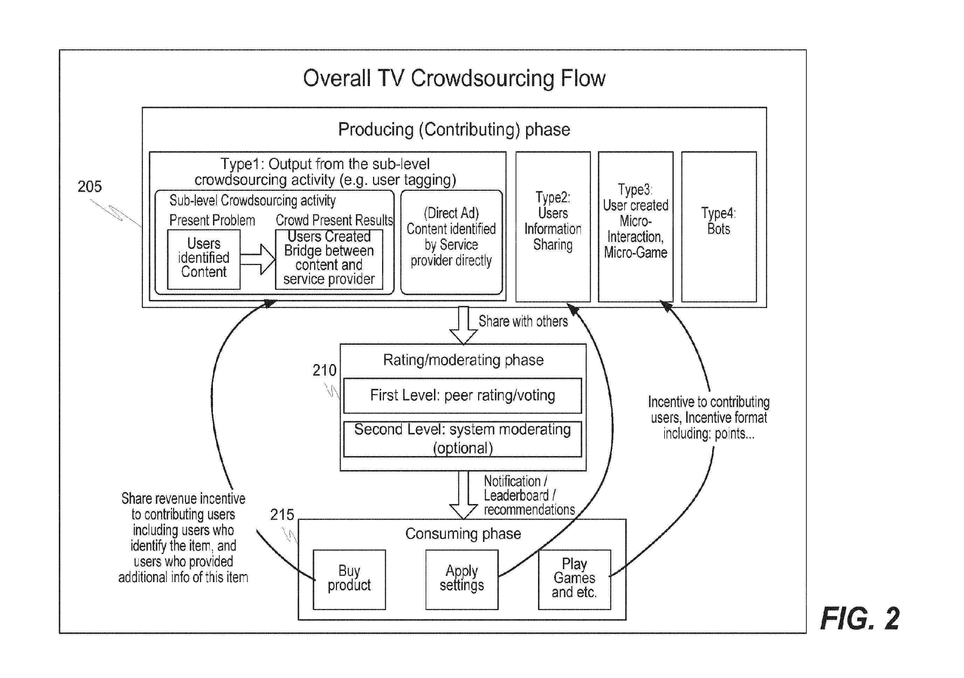

Figure 2 is a high level flow diagram of three main phases of crowd sourcing. In the producing phase 205, content contributions with additional value is added by the users or is generated by the system. In this phase, activities involving additional level crowd sourcing value-added content/services are created by the users. The first typeof output (Type 1) is user tagging and linking to form a bridge between content and a seller. A user-generated tag, for example, can form a link between a selected segment of content and a service provider. A tag may, for example, have metadata at a scene level for a segment of content. For example, a video having a scene showing a sports car may be tagged in that scene with a link to a car dealer selling the same model of sports car. This can be a sub-crowd sourcing activity with people who identify problem and people who solve the problem. All the users in this activity will be treated as contributor to the final consumer. Additionally, in one embodiment service providers themselves can contribute by identifying content and providing additional information about the content. As an example, a service provider could be a restaurant or car dealer that performs tagging as a way of advertising.

For user tagging it is typically important that end users of tagged content can go to service provider/seller directly to purchase. The present invention creates tagged content that permits users of tagged content to use the tags to make a purchase. The system of the present invention enables a distributed bridge, which is users identify item, users create product info, users consume.

A second type of output (Type 2) in the producing phase 205 is users sharing information. For example, user can share any direct information, such as the best TV settings to watch content.

A third type of output (Type 3) in the producing phase 205 is user created games. For example, users can create micro-interaction, micro-games.

A fourth type of output (Type 4) in the producing phase is bots. The bots may, for example, perform automated searching or other tasks to generate additional value based on the media content.

The second phase 210 is a user rating/moderation phase. The user rating/voting can also be a hierarchical module. At the first level, it may be implemented as a peer-to-peer topology, with users rating/voting as peers and super users can be selected as judges. At the second level, the system can have a final decision moderating role, such as to break ties or otherwise formulate final decisions on ratings/votes. Incentives can be provided for voting and judging, such as points, rewards, or micro-payments.

The third phase 215 is a consuming phase in which viewer may, for example, play micro-games or augmented content, apply information shared by users, or access more information about products based on the tags (e.g., to make a purchase). In the consuming phase, incentives may be sent to the original contributors involved in the producing phase 205. Additionally, incentives may also or maybe second phase as well. The incentives may depend on the types of content consumed, the incentive could be money if it is related to a product transaction, or points if it is for entertainment.

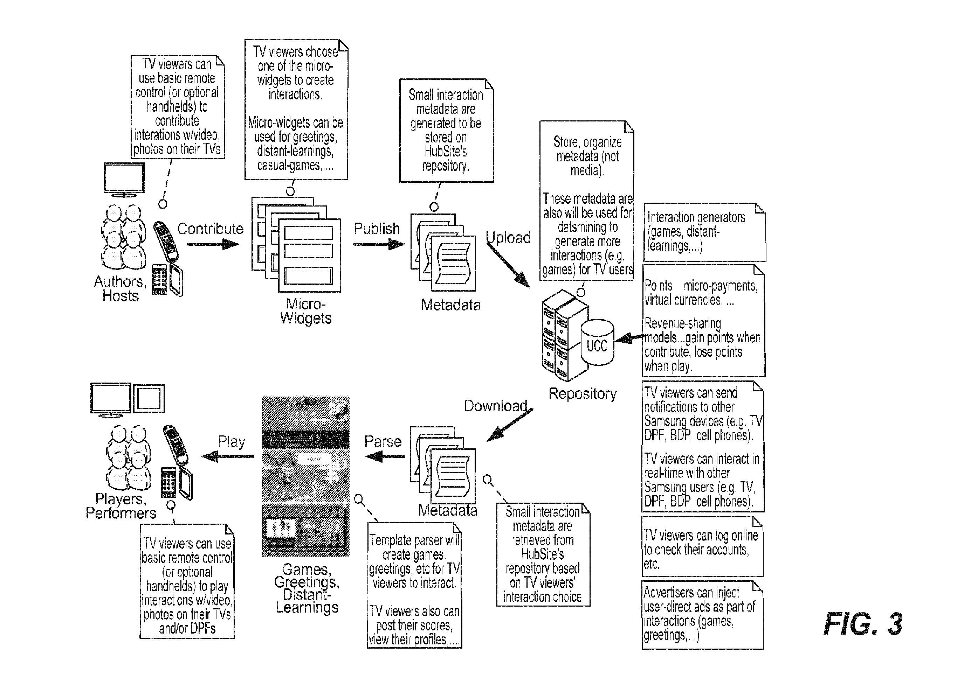

Figure 3 is a diagram illustrating a multiple-level crowd sourcing method using micro-apps and small interaction metadata in accordance with one embodiment. Micro-apps are described in more detail in U.S. Patent Application No. 13/080,100, "Context Aware Media Interaction," which is incorporated by reference. A "micro-app" (short for micro-application), resides on one or more user devices such as on an internet television and on individual mobile devices and/or a home computer. TV viewers can act as authors or hosts using their interactive device to make contributions. The contributions may be associated with media content available. In one implementation, micro-apps are used to make contributions that are published as small interaction metadata generated to be stored on the hubsite's repository. The micro-apps allow crowd-sourcing and user contributions in new ways.

In one implementation, the metadata is uploaded to the hubsite and the hubsite organizes and stores the metadata without the media content; however more generally it will be understood that the media content could also be stored. Other viewers may download the interaction metadata from the hubsite. This metadata may be parsed to create games greetings, or content for TV viewers to interact with. TV viewers can use their interaction devices to consume the contributions. The use of micro-apps and small interaction metadata makes this implementation very efficient. Additionally, a variety of interaction games and learning services may be provided. An incentive system (e.g., points or micro-payments) may be supported to reward contributors. Additionally, the system can support advertising based on the contributions and also support interactions with other interaction devices and computers to help develop a community for crowd-sourcing.

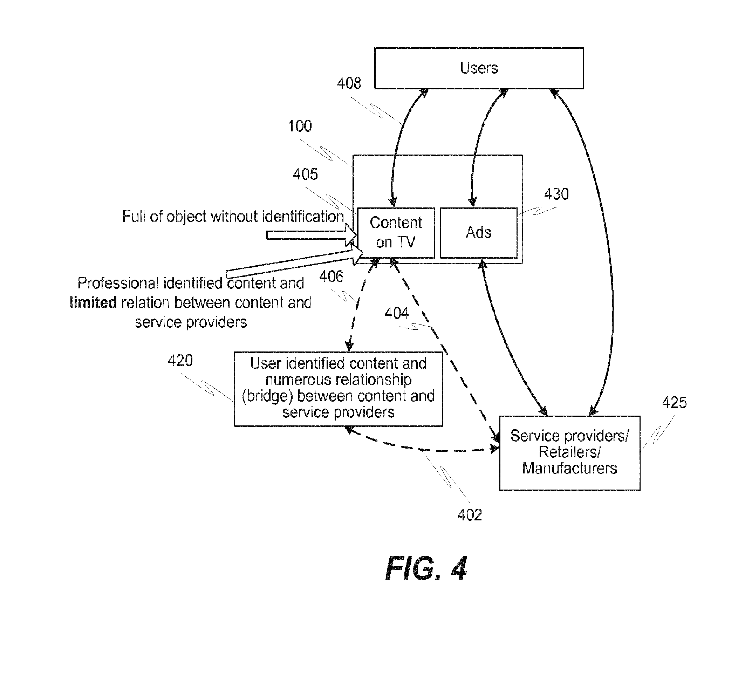

Figure 4 illustrates how crowd sourcing provides a bridge between television users, content, advertisements, and service providers. Professionally identified content 405 on a shared media device 100 (e.g., using a related content database) has only a limited relationship between content and service providers. Thus, for example, an object can appear in content displayed on television but not necessarily have any identification to link it to a source of goods or a service provider. That is, typically most of the identified content does not have a relationship between content and service providers. However, in an embodiment of the present invention, the crowd sourcing system and method provides a distributed bridge and new options 402, 404, 406, and 408 to form associations to target advertisements. Users can identify an item or service within content 420 and form an association with a source of goods or services 425. The user's can then create product information, which users then consume. As one example, consider an individual user who has a passionate hobby. That individual user can view content and then input a tag to identify an item or service associated with a segment of the content. The tag, in turn, permits ads 430 to be based on the relationships described in the tags.

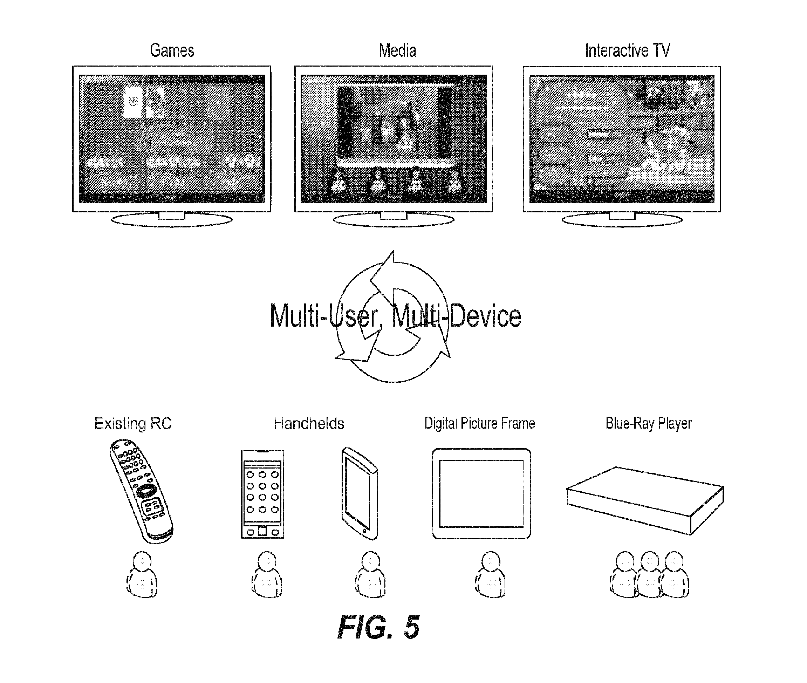

Figure 5 illustrates how crowd sourcing may be widely applied to interactive television, media, and interactive games. The approach is application for a diverse community across a range of different devices and applications. Thus, different micro-communities may be formed based on user interests. Within each micro-community, individual viewers may take on roles as author/hosts, performers/players, judges/scorers, and observers/promoters.

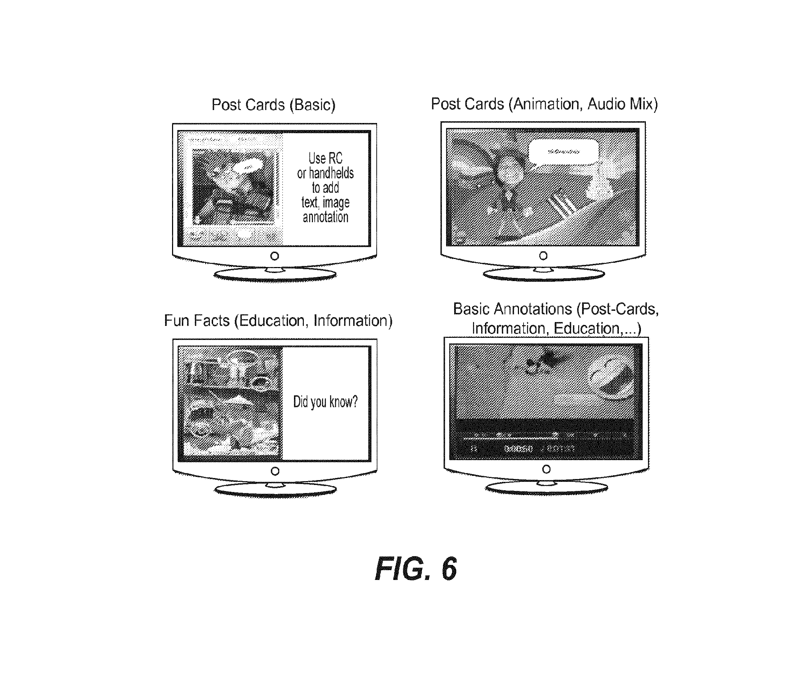

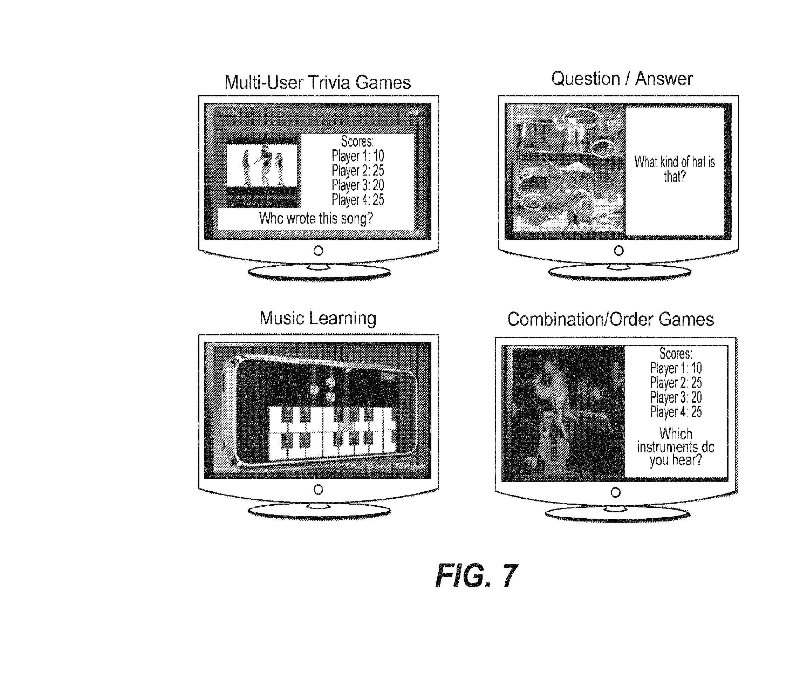

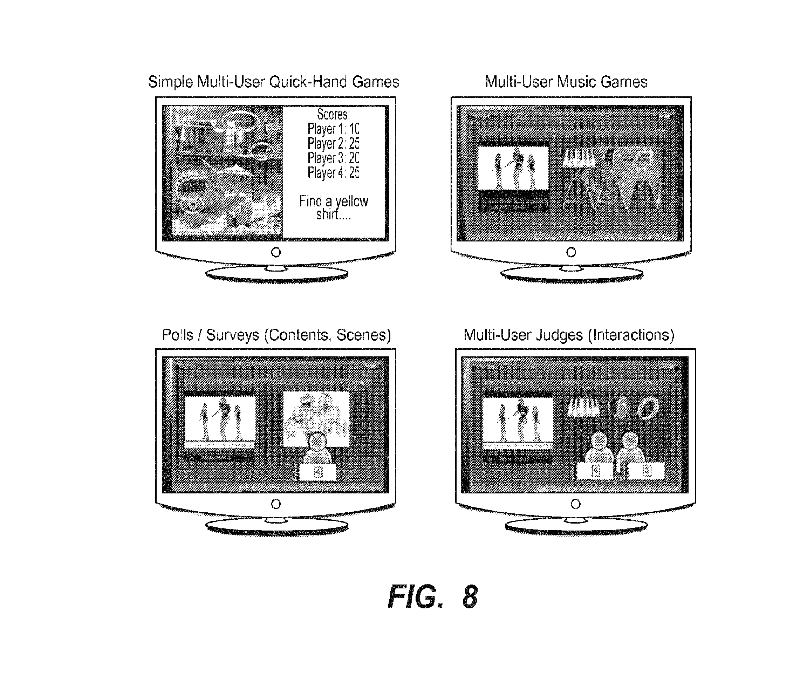

Figure 6 illustrates the example of a post card and fact game. A basic postcard may be provided; individual users may then add animations, annotations, or other information. Similarly, a fun facts quiz game format also permits viewers to add annotations or other information. Figure 7 illustrates example of micro-games, such as trivia games, question/answer games, music learning games, and combination/order games. Figure 8 illustrates examples of other types of games, polls, and judging.

An individual media device and its associated interaction devices may also report context information such as users present, devices used, location, time, environment, and other attributes of content viewed. This context information is useful to compensate contributors, rankers, and judges. However, more generally context information may be used to aid users to input metadata and also be used as a factor in determining the distribution of metadata and augmented content. As one example, the metadata and/or augmented content that is generated could be shared to a user's social circle according to the user's social context. As another example, context information may be used to assist users to input information for crowd sourcing. For example, when a user finds a product within a segment of content, the system may provide auto-complete functions, a set of phrases, or other assists to aid a user to input tags with metadata. More generally, other aspects of the user interface may be customized based on context to reduce the possibility of the user entering random data. Thus, when a user sees a product and wants to identify it and tag it with some related metadata the context awareness of the system aids a user to make inputs. As another example, Exemplary Smart TV Implementation

At a system level there are many alternatives to the individual components in order to create an environment where multiple TV viewers can concurrently interact with one or multiple interactive WiFi networked TVs. In one embodiment, crowd sourcing leverages off Smart TV features, with an exemplary Smart TV being the Smart Hub ^{™} product from Samsung Electronics Company, Ltd. Smart TVs are Internet compatible. In a Smart TV embodiment the interaction devices, which are second screen devices, may for example, include mobile device such as the Samsung's Omnia™, Apple iPhones™/iPod™ touch pads. There is thus potential for multiple user interactions using multiple handheld devices within each home through a WiFi router. In one implementation, an active Smart TV App is used to broadcast, receive, query, and sync "discovery" status with all other connected TVs and handhelds (within the household through a common WiFi access-point). All connected handhelds use these synchronized "discovery" status to select/join in the preferred active Smart TV App. The active Smart TV App concurrently subscribes/filters/receives well-known and custom "interaction inputs" from multiple handhelds at the same time using multi-user, multi-device centric API. The active Smart TV App concurrently requests/handles well-known and custom "application controls/commands" to/from multiple handhelds. The active Smart TV App concurrently gets/sets/subscribes/receives/syncs/transfer swell-known and custom "data/assets" to/from multiple handhelds. Also, the active Smart TV App sets/trick-plays/receives timecode-based custom triggers.

Using these new multi-user, multi-device collaborative environment, multiple users can concurrently interact with existing Smart TV Apps. This includes online Video (YouTube™, NetFlix™, Amazon™ video on demand, Blockbuster™, etc.); online Music (Pandora™); and online Photo (Picasa™). Additionally, new classes of Smart TV Apps in these application domains are supported, where users can create their own: casual games collaboration; online media collaboration; and interactive TV collaboration.

In one embodiment, Smart TV Apps support multiple users, multiple devices discovery. An Active Smart TV App broadcasts, receives, queries, and syncs "discovery" status with all other connected TVs and handhelds (within the household through a common WiFi access-point). Smart TV Apps supports multiple users, multiple devices logins/join: All connected handhelds to use these synchronized "discovery" status to select/join a preferred active Smart TV App. Additionally, multiple users, multiple devices input-controller is supported. The active Smart TV App concurrently subscribes/filters/receives well-known and custom "interaction inputs" from multiple handhelds at the same time using multi-user, multi-device centric API.

Multiple TV viewers can concurrently send "interaction inputs" from their handhelds to the TV at the same time in a variety of ways. Examples include system log in, log out; system basic/limited multi-touch coordinates; system basic/limited accelerometers changes; system basic screen rotation status; system basic one-finger swipe gesture; system basic two-fingers pinch gesture; application: basic text annotation; application basic icon annotation; application basic music note annotation; application bookmarking and tagging; application voting/rating; application choice selection; and custom syntax. Additionally, videos or images may also be added by users.

Multiple TV viewers can concurrently receive "interaction inputs" from the TV to their handhelds at the same time. This may be implemented with remote control buttons and/or a custom syntax.

For handheld devices, a multiple users, multiple devices data-controller may be implemented with Active Smart TV App to concurrently get/set/subscribe/receive/sync/transfer well-known and custom "data/assets" to/from multiple handhelds. Examples of protocols include: XML & binary; persistent & transient; single-Value & Multi-Value Synchronization; set, get; and subscriptions, triggers.

Attributes of an exemplary multiple users, multiple devices command-controller has active Smart TV App to concurrently request/handle well-known and custom "application controls/commands" to/from multiple handhelds. Examples including handling; audio mixing (SDL); custom local & remote; custom execute, handler, return value & status; and custom syntax.

Multiple users, multiple devices timer-controller: active Smart TV App to set/trick-play/receive timecode-based custom "multimedia timers." Examples include: custom payload; single & list; create, trigger; trick-playback (play, pause, time-seek); and list merge, filter, retrieve.

User-created metadata is supported. Multiple TV viewers use remote-control and/or handhelds to create their own media augmentation metadata and share with other TV viewers. Select media augmentation templates are supported (e.g. text annotation, icon annotation, trivia, poll, ...). Additional support is provided for recording and syncing of media augmentation metadata to broadband media. The system saves media augmentation metadata to the TV and/or the hubsite. The users may browse, sort, view, retrieve media augmentation metadata from TV, handhelds, and/or Hubsite. The system also supports multiple-select, toggle media augmentation metadata for playback. Other features include trick-playback (e.g. play, pause, forward, rewind) broadband media with selected media augmentation metadata. Users may also rank, vote, and promote selected media augmentation metadata.

In one embodiment of the present invention crowd sourcing is implemented in a context aware media television systems executing micro-apps in TV+ mode. An exemplary advanced television media system is described in U.S. Patent Application No. 13/080,100, "Context Aware Media Interaction," which is incorporated by reference. A "micro-app" (short for micro-application), which resides on one or more user devices such as on an internet television and on individual mobile devices and/or a home computer. The television may act as a shared device that interacts with other interaction devices, such as a smart phone, mobile device, or local computer. Advanced internet televisions are Ethernet/WiFi enabled and permit other devices to be in communication with them, including smart phones and other personal computing devices.

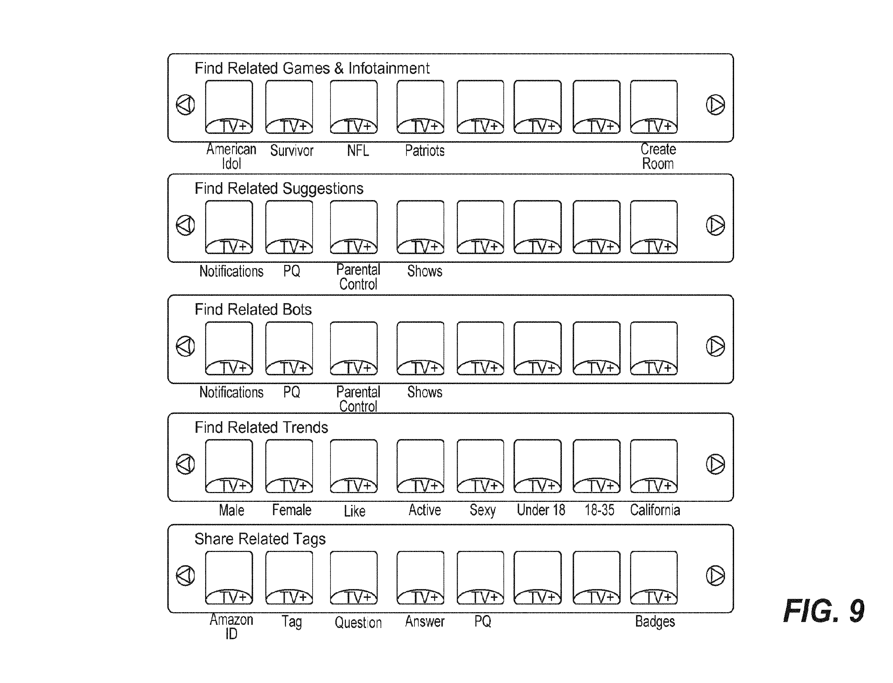

In an augmented mode (called TV+ mode), interactions with the television may happen through individual interaction devices which may be operated by different users, such as different members of a family as one example. The users may be presented with available micro-apps on individual interaction devices and then execute a selected micro-app to receive augmented information about current media content. This causes both the television and the interaction device to receive the content retrieved by the micro-app. This may be used to provide information about current media, recommendations, search results (e.g., in the form of tags), and also shopping services. Consequently, it will be understood that the inputs to the hubsite may be implemented in a TV+ implementation. Figure 9 illustrates how in one example of TV+ integration a user interface is provided to aid a user find related games, suggestions, trends, and share tags to promote development of a crowd sourcing community of television viewers.

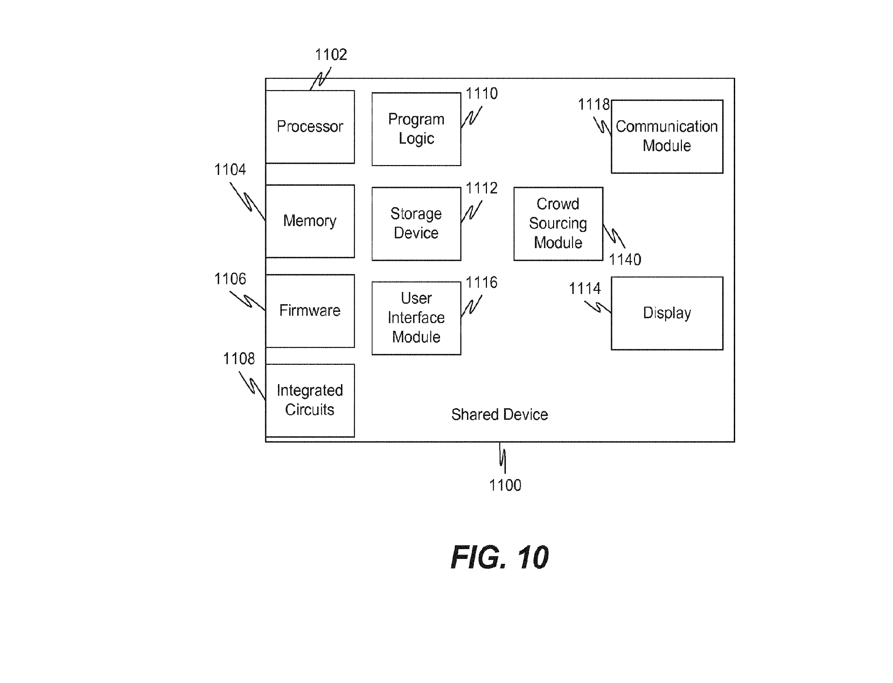

Figure 10 illustrate exemplary modules of a shared media device. A shared media device may include a display 1114, communications module 1118, program logic 1110, storage device 1113, user interface module 1116, firmware 1106, integrated circuits 1108, processor 1102, and memory 1104. Additionally a crowd sourcing module may be provided including computer program instructions stored on a memory for implementing crowd sourcing aspects of the shared media device.

Reference has been made in detail to specific embodiments of the invention including the best modes contemplated by the inventors for carrying out the invention. Examples of these specific embodiments are illustrated in the accompanying drawings. While the invention is described in conjunction with these specific embodiments, it will be understood that it is not intended to limit the invention to the described embodiments. On the contrary, it is intended to cover alternatives, modifications, and equivalents as may be included within the spirit and scope of the invention as defined by the appended claims. Specific details are set forth in order to provide a thorough understanding of the present invention. The present invention may be practiced without some or all of these specific details. In addition, well known features may not have been described in detail to avoid unnecessarily obscuring the invention.

In accordance with the present invention, the components, process steps, and/or data structures may be implemented using various types of operating systems, programming languages, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein. The present invention may also be tangibly embodied as a set of computer instructions stored on a computer readable medium, such as a memory device.

## Claims

1. A method for crowd-sourcing in a community of interactive television users in which individual users may consume content and make contributions related to the content, comprising:
receiving, from a community of consumers of media content, user inputs from a subset of users acting as contributors providing media contributions to the media content, wherein the media contributions include metadata for at least one other application to generate augmented content;
generating augmented content based on the user inputs; and
sharing the augmented content with the community of consumers.

2. The method of claim 1, further comprising receiving context information from individual interactive television systems, wherein the context information is used to determine at least one of a compensation reward and distribution of augmented content.

3. The method as claimed in claim 1 or 2, further comprising utilizing context information from individual interactive television systems to assist contributors to input metadata related to content.

4. The method as claimed in any one of claims of claim 1 to 3, wherein the media contributions include metadata at a scene-level, the method further comprising generating advertisements based on the scene-level metadata.

5. The method as claimed in any one of claims of claim 1 to 4, further comprising providing an incentive for media contributions to the subset of contributors.

6. The method as claimed in any one of claims of claim 1 to 5, wherein the augmented content includes user-provided recommendations for viewing the content.

7. The method as claimed in any one of claims of claim 1 to 6, wherein the augmented content includes user-created games contributed by the subset of contributors that is associated with the content.

8. The method as claimed in any one of claims of claim 1 to 7, wherein individual users in the community of interactive television users may further serve a role to rank media contributions, the method further comprising receiving peer ratings judging augmented content.

9. The method as claimed in any one of claims of claim 1 to 8, further comprising generating recommendations to the community of consumers on the augmented content based at least in part on the peer ratings and providing an incentive to the rankers.

10. A method for crowd-sourcing in an interactive television network in which each interactive media device in the network is communicatively coupled to the Internet and in which individual users may consume content and make contributions related to the content, comprising:
providing a communication interface between a content repository and each interactive media device within the network, where each interactive media device includes at least one associated interaction device and micro-applications for users to enter inputs;
receiving at the content repository user inputs from a subset of users acting as contributors to a selection of media content;
generating augmented content based on the received user inputs; and
providing access to the augmented content available to a community of consumers of the media content.

11. The method of claim 10, wherein the augmented content includes scene-level tags bridging content to service providers.

12. The method as claimed in claim 10 or 11, further comprising generating advertisements based on the tags.

13. The method as claimed in any one of claims of claim 10 to 12, wherein the augmented content includes user provided recommendations for viewing the content.

14. The method as claimed in any one of claims of claim 10 to 13, wherein the augmented content includes user-created games associated with the content.

15. A system for crowd-sourcing in an interactive television network, comprising:
a repository of augmented media content, the repository configured to receive from a community of consumers of media content, user inputs from a subset of contributors via a network providing metadata contributions to media provided to the network;
the repository generating augmented content from the user inputs; and
the repository sharing the augmented content with the network.
